# EUROPEAN PATENT APPLICATION

(11) **EP 0 654 500 A1**
(43) Date of publication of application: **24.05.1995**
(21) Application number: 94308436.8
(22) Date of filing: 15.11.1994
(51) Int. Cl.: C08L 27/06

(54) **Vinyl chloride resin composition for powder molding**

(30) Priority: 22.11.1993 JP 292031/93; 08.08.1994 JP 185995/94
(71) Applicant: SUMITOMO CHEMICAL COMPANY, LIMITED, Osaka (JP)
(72) Inventor: Nakatsuji, Yoshihiro, Toyonaka-shi (JP); Wakatsuki, Akira, Niihama-shi (JP); Fuse, Kazuyoshi, Niihama-shi (JP)
(74) Representative: Ablewhite, Alan James

(57) **Abstract**

Provided is a vinyl chloride resin composition for powder molding which is excellent in meltability at low temperatures and in powder characteristics and gives molded articles having excellent properties and which comprises a particle vinyl chloride resin, a fine particle vinyl chloride resin, a plasticizer, a stabilizer and a pigment wherein the particle vinyl chloride resin is obtained by the polymerization in the presence of (A) a fatty acid ester of sorbitan and (B) a fatty acid ester of polyoxyethylenesorbitan, or in the presence of (C) a fatty acid ester of pentaerythritol and/or a fatty acid ester of dipentaerythritol, or in the presence of (A), (B) and (C). More preferably, the particle vinyl chloride resin is one which is obtained by the polymerization in the presence of additionally (D) a fatty acid ester of glycerin.

## Description

### BACKGROUND OF THE INVENTION

### Field of the Invention

The present invention relates to a vinyl chloride resin composition for powder molding. More particularly, it relates to a vinyl chloride resin composition for powder molding which is excellent not only in meltability at low temperatures, but also in powder characteristics and furthermore, from which a molded article excellent in properties can be obtained by powder molding.

### Related Art Statement

The skin materials such as crash pad, armrest, headrest, console, meter cover and door trim which are interior trim parts of automobiles are required to be light in weight and superior in soft touch and to have grain leather patterns or stitch patterns which give feeling of high-quality.

It is known that these skin materials are made by powder slush molding which comprises allowing a powder composition prepared by dryblending a vinyl chloride resin with a plasticizer, a stabilizer, a pigment or the like to contact with a heated mold, thereby to fuse the powders to each other and removing the unfused excess powders.

Recently, in the powder slush molding method, reduction of energy cost for preheating of mold, improvement of productivity by shortening the preheating time of mold, reduction of heat shock, and prolongation of life of mold by diminishing the stain of mold have been demanded and development of powder compositions which melt at low temperatures has been desired.

In order to melt a powder composition at low temperatures, it is considered to use a vinyl chloride resin lowered in polymerization degree or a vinyl chloride resin having small particle size. However, according to these methods, coarse agglomerated particles are formed in the step of dryblending probably because of deterioration in absorption of plasticizer and thus, uniform powder compositions cannot be obtained.

Moreover, attempts have been made to improve meltability of resins without using resins which are changed in the polymerization degree or particle size. For example, there are known a method of adding a lubricant such as a fatty acid ester of pentaerythritol or a fatty acid ester of dipentaerythritol to a rigid vinyl chloride resin (Japanese Patent Kokoku No.55-17054) and a method of adding a mixed ester lubricant obtained by the reaction of pentaerythritol, dipentaerythritol, a dibasic organic acid and a fatty acid to a vinyl chloride resin (Japanese Patent Kokoku No.51-20209 and Japanese Patent Kokai No.53-6350).

However, when these lubricants are dryblended with vinyl chloride resins in the same manner as in dryblending of plasticizer, stabilizer, pigment, etc., only such powder compositions which insufficiently melt at low temperatures can be obtained.

Furthermore, it is known that vinyl chloride resins obtained by suspension polymerization of monomers mainly composed of vinyl chloride in the presence of fatty acid esters of glycerin are superior in processability (Japanese Patent Kokoku No.51-13195).

However, when the vinyl chloride resins thus obtained are dryblended with plasticizer, stabilizer, pigment, etc., only such powder compositions which insufficiently melt at low temperatures can be obtained.

### OBJECT AND SUMMARY OF THE INVENTION

As a result of intensive research conducted by the inventors in an attempt to find a further superior powder composition, it has been found that when a particle vinyl chloride resin obtained by the polymerization in the presence of specific esters of (A) a fatty acid ester of sorbitan and (B) a fatty acid ester of polyoxyethylenesorbitan or (C) a fatty ester of pentaerythritol and/or a fatty acid ester of dipentaerythritol is used as the vinyl chloride resin and this is dryblended with plasticizer, stabilizer, pigment and the like, the resulting powder composition melts at the lower temperatures and it has been further found that when a particle vinyl chloride resin obtained by the polymerization in the presence of (A), (B) and (C) is used, the resulting composition melts at further lower temperatures and besides, when a particle vinyl chloride resin obtained by the polymerization in the coexistence of additionally (D) a fatty acid ester of glycerin is used, the resulting composition melts at further lower temperatures. Thus, the present invention has been accomplished.

That is, the present invention provides an industrially superior vinyl chloride resin composition comprising a particle vinyl chloride resin, a fine particle vinyl chloride resin, a plasticizer, a stabilizer, a pigment and others, characterized in that the particle vinyl chloride resin is obtained by the polymerization in the presence of (A) a fatty acid ester of sorbitan and (B) a fatty acid ester of polyoxyethylenesorbitan or in the presence of (C) a fatty acid ester of pentaerythritol and/or a fatty acid ester of dipentaerythritol.

### DETAILED DESCRIPTION OF THE INVENTION

The present invention will be explained in detail.

The vinyl chloride resin composition for powder molding of the present invention is characterized by being prepared using a particle vinyl chloride resin obtained by the polymerization in the presence of the above-mentioned esters (A) and (B), or (C) as the vinyl chloride resin. The monomers to be polymerized include vinyl chloride alone and mixtures comprising vinyl chloride as a main component and ethylenically unsaturated monomers copolymerizable with vinyl chloride.

As the ethylenically unsaturated monomers, mention may be made of, for example, olefins such as ethylene and propylene, vinyl halides other than vinyl chloride, vinylidene halides, vinyl ethers, vinyl esters such as vinyl acetate, and (meth)acrylic esters.

As (A) the fatty acid esters of sorbitan, (C) the fatty acid esters of pentaerythritol and/or the fatty acid esters of dipentaerythritol, and (D) the fatty acid esters of glycerin, there may be used those which are prepared by esterification of at least one hydroxyl group in one molecule of the starting polyhydric alcohols with fatty acids. As (B) the fatty acid esters of polyoxyethylenesorbitan, there may be used those which are prepared by etherification of at least one hydroxyl group in starting alcohols with ethylene oxide or the like and esterification of at least one hydroxyl group with fatty acids.

The fatty acids include, for example, those of about 5-22 carbon atoms such as pentylic acid, hexylic acid, octylic acid, nonylic acid, lauric acid, palmitic acid, stearic acid, oleic acid and arachic acid and mixtures thereof.

In the present invention, mixed esters prepared by using a small amount of dibasic acids in addition to the fatty acids (Japanese Patent Kokai No.53-6350) can also be used. Examples of the dibasic acids are malonic acid, maleic acid, succinic acid, glutaric acid, adipic acid, pimelic acid and phthalic acid. The content of the dibasic acid is usually 1/3 mol or less for 1 mol of the fatty acid.

When the particle vinyl chloride resin is prepared by suspension polymerization, the shape of the resin particles produced tends to become ununiform or coarse particles tend to be produced in a large amount with decrease in the carbon number of the fatty acid portion of the esters. In this case, therefore, it is preferred to use esters having 8-22 carbon atoms in the fatty acid portion.

The present invention is characterized by using a particle vinyl chloride resin obtained by the polymerization in the presence of the above-mentioned (A) and (B), or (C). The weight ratio of (A) and (B) is usually 10:1-1:10, preferably 5:1-1:5.

Furthermore, it is preferred to use a particle vinyl chloride resin prepared by the polymerization in the presence of (C) or (D) in addition to (A) and (B) or in the presence of (D) in addition to (C). In this case, a composition which melts at the lower temperatures is obtained. It is more preferred to use a particle vinyl chloride resin prepared by the polymerization in the presence of (C) and (D) in addition to (A) and (B). In this case, a composition which melts at further lower temperatures can be obtained.

Amount of each of the esters (A)-(D) based on the monomer is usually 0.01-10 parts by weight based on 100 parts by weight of the monomer and the total amount of the esters is usually 0.02-20 parts by weight based on 100 parts by weight of the monomer. In the case of the resin being prepared by suspension polymerization, with increase in the total amount of the esters used, the shape of the resin particles produced tends to become ununiform or coarse particles tend to be produced in a large amount. Therefore, the total amount is preferably 10 parts by weight or less.

For producing the particle vinyl chloride resin, for example, emulsion polymerization, bulk polymerization and the like can be employed in addition to suspension polymerization. Kind and amount of catalysts used for the polymerization and reaction temperature and apparatus used for the polymerization may be any of known ones and are not limited.

The particle vinyl chloride resin thus obtained is used in the present invention and the particle size thereof is usually 60-400 µm.

The fine particle vinyl chloride resin used in the present invention is for coating the particle vinyl chloride resin. Examples of the fine particle vinyl chloride resin are vinyl chloride polymers and copolymers of vinyl chloride with ethylene, propylene, vinyl acetate, (meth)acrylic acid, 2-hydroxyethyl (meth)acrylate or the like which is copolymerizable with vinyl chloride. Mixtures of two or more polymers may also be used.

The particle size of the fine particle vinyl chloride resin is usually 0.1-10 µm. The fine particle vinyl chloride resin is normally produced by emulsion polymerization or micro-suspension polymerization.

Amount of the fine particle vinyl chloride resin used is generally 3/97-20/80 in the weight ratio to the particle vinyl chloride resin.

The plasticizers used in the present invention include, for example, dialkyl phthalates having 9-11 carbon atoms in the alkyl groups, such as diisodecyl phthalate and diisoundecyl phthalate and trialkyl trimellitates having 7-11 carbon atoms in the alkyl groups, such as trioctyl trimellitate, tri-2-ethylhexyl trimellitate and tridecyl trimellitate. There are no limitations as far as they can be used in resin compositions for powder molding. Amount of the plasticizers is usually 40-120 parts by weight based on 100 parts by weight of the vinyl chloride resin.

The stabilizers include, for example, metal compounds of zinc, barium, sodium, potassium, calcium, lithium, tin and the like, such as metal salts of carboxylic acids. Preferred are composite stabilizers of these compounds. Together with these stabilizers, there may also be used magnesium oxide, magnesium hydroxide, hydrotalcites, zinc oxide, barium oxide, calcium oxide, barium phosphate and the like. There may be further used antioxidants such as of phenolic type, thioether type and phosphorus type, light stabilizers such as of diketo compound type, salicylic acid type, benzophenone type, benzotriazole type and hindered amine type, and epoxy compounds. There are no limitations as far as they can be used in resin compositions for powder molding. Amount of the stabilizers is usually 3-15 parts by weight based on 100 parts by weight of the vinyl chloride resin. The composition of the present invention can optionally contain ingredients such as foaming agent and foaming aid in addition to the plasticizer and stabilizer.

The pigments include, for example, organic pigments such as azo pigments, phthalocyanine pigments, threne pigments and dying lakes and inorganic pigments such as oxides, e.g., titanium oxide, chromomolybdates, sulfide selenium compounds, ferrocyanides and carbon black.

Amount of the pigments used is usually 0.5-10 parts by weight based on 100 parts by weight of the vinyl chloride resin.

The composition of the present invention is produced usually by dryblending a particle vinyl chloride resin with plasticizer, stabilizer and pigment and optionally various ingredients such as foaming agent and foaming aid and then, blending a fine particle vinyl chloride resin with the resulting blend. The dryblending temperature is usually 60-130°C and the temperature at the second blending stage is usually 40-80°C.

In this way, the vinyl chloride resin composition for powder molding of the present invention is obtained. The resulting composition is superior not only in meltability at low temperatures, but also in powder characteristics and besides, the molded products obtained by powder molding the composition have excellent properties. Therefore, the composition is industrially useful.

### PREFERRED EMBODIMENTS OF THE INVENTION

The following nonlimiting examples illustrate the present invention. The meltability was evaluated by the following method.

The powder composition was coated at 1 mm thick on a plate of 190-220°C using GEIGY GRADED BLOCK (temperature gradient block) manufactured by Wallace Co., Ltd. and the surface was observed after lapse of 1 minute and the temperature at the boundary point between melting and unmelting was measured.

### Example 1

(Preparation of particle vinyl chloride resin)

In a nitrogen stream, 40 parts by weight of adipic acid and 470 parts by weight of stearic acid were added to 100 parts by weight of pentaerythritol and then, 1.5 part by weight of sodium hydroxide was added thereto, followed by stirring at 250°C for 2 hours. After completion of the reaction, dehydration was carried out to obtain a mixed ester of adipic acid· stearic acid with pentaerythritol.

A stainless steel polymerizer of 100 liters in internal volume equipped with a stirrer was deaerated and in this polymerizer were charged 60 kg of deionized water, 30 kg of vinyl chloride monomer, 5 g of di-2-ethylhexyl peroxydicarbonate, 9 g of tert-butyl peroxypivalate, 240 g of sorbitan monostearate (LEODOL SPS-10 manufactured by Kao Ltd.), 60 g of polyoxyethylenesorbitan monostearate (LEODOL TWS-106 manufactured by Kao Ltd.), 15 g of calcium hydroxide, 150 g of the above-obtained mixed ester of adipic acid·stearic acid with pentaerythritol and 150 g of glycerin monostearate. Then, the content was heated to 62.5°C to start the polymerization. The pressure at starting of the polymerization was 10 kg/cm²G and when the pressure decreased to 9 kg/cm²G, the unreacted monomers were purged and the polymerization was stopped.

The resulting particle vinyl chloride resin had an average polymerization degree of 800 and an average particle size of 160 µm.
(Preparation of resin composition for powder molding)

90 parts by weight of the above particle vinyl chloride resin was introduced into a super mixer and then was stirred at a constant rotational speed with heating and when the resin temperature reached 80°C, 60 parts by weight of a trimellitate plasticizer, 6 parts by weight of Ba-Zn type stabilizer and 3 parts by weight of a pigment were added and dryblended. When the temperature of the composition reached 120°C, the composition was cooled to 50°C and 10 parts by weight of a fine particle vinyl chloride resin (polymer prepared by micro-suspension having an average polymerization degree of 800 and an average particle size of 1 µm) was uniformly dispersed in the composition to obtain a resin composition for powder molding. The resulting composition was evaluated and the results are shown in Table 1.

### Example 2

A particle vinyl chloride resin was prepared in the same manner as in Example 1 except that glycerin monostearate was not used. Using the resulting particle vinyl chloride resin, a powder composition for powder molding was prepared in the same manner as in Example 1.

Results of the evaluation are shown in Table 1.

### Example 3

A particle vinyl chloride resin was prepared in the same manner as in Example 1 except that the mixed ester of adipic acid·stearic acid with pentaerythritol was not used. Using the resulting particle vinyl chloride resin, a composition for powder molding was prepared in the same manner as in Example 1.

Results of the evaluation are shown in Table 1.

### Example 4

A particle vinyl chloride resin was prepared in the same manner as in Example 1 except that the mixed ester of adipic acid·stearic acid with pentaerythritol and the glycerin monostearate were not used. Using the resulting particle vinyl chloride resin, a powder composition for powder molding was prepared in the same manner as in Example 1.

Results of the evaluation are shown in Table 1.

### Example 5

A glass lined polymerizer of 100 liters in internal volume equipped with a stirrer was deaerated and in this polymerizer were charged 45 kg of deionized water, 40 kg of vinyl chloride monomer, 40 g of partially saponified polyvinyl alcohol, 15 g of tert-butyl peroxypivalate, 200 g of the above obtained mixed ester of adipic acid·stearic acid with pentaerythritol, 200 g of glycerin monostearate and 20 g of a chain transfer agent. Then, polymerization was started by heating the content to 62°C. The pressure at starting of the polymerization was 10 kg/cm²G and when the pressure decreased to 9 kg/cm²G, the unreacted monomers were purged and the polymerization was stopped.

The resulting particle vinyl chloride resin had an average polymerization degree of 800 and an average particle size of 140 µm. Using the particle vinyl chloride resin, a powder composition for powder molding was obtained in the same manner as in Example 1.

Results of the evaluation are shown in Table 1.

### Example 6

A particle vinyl chloride resin was prepared in the same manner as in Example 5 except that the glycerin monostearate was not used. Using the resulting particle vinyl chloride resin, a powder composition for powder molding was prepared in the same manner as in Example 1.

Results of the evaluation are shown in Table 1.

### Comparative Example 1

The polymerization was carried out in the same manner as in Example 5 except that the mixed ester of adipic acid·stearic acid with pentaerythritol was not used. Then, using the resulting particle vinyl chloride resin, a powder composition for powder molding was prepared in the same manner as in Example 1.

Results of the evaluation are shown in Table 1.

### Comparative Example 2

A particle vinyl chloride resin was obtained in the same manner as in Example 5 except that the glycerin monostearate and the mixed ester of adipic acid·stearic acid with pentaerythritol were not used.

Then, a powder composition for powder molding was obtained in the same manner as in Example 1 except that the above obtained particle vinyl chloride resin was used and 0.5 part by weight of glycerin monostearate and 0.5 part by weight of a mixed ester of adipic acid· stearic acid with pentaerythritol were added simultaneously with the addition of the plasticizer in the step of preparation of the resin composition for powder molding in Example 1. Results of the evaluation are shown in Table 1.

**Table 1**

| Example | Melting temperature (°C) |
|---|---|
| Example 1 | 199 |
| Example 2 | 201 |
| Example 3 | 203 |
| Example 4 | 205 |
| Example 5 | 206 |
| Example 6 | 207 |
| Comparative Example 1 | 211 |
| Comparative Example 2 | 211 |

## Claims

1. A vinyl chloride resin composition for powder molding which comprises a particle vinyl chloride resin, a fine particle vinyl chloride resin, a plasticizer, a stabilizer and a pigment wherein the particle vinyl chloride resin is obtained by the polymerization in the presence of (A) a fatty acid ester of sorbitan and (B) a fatty acid ester of polyoxyethylenesorbitan.

2. A vinyl chloride resin composition for powder molding which comprises a particle vinyl chloride resin, a fine particle vinyl chloride resin, a plasticizer, a stabilizer and a pigment wherein the particle vinyl chloride resin is obtained by the polymerization in the presence of (C) a fatty acid ester of pentaerythritol and/or a fatty acid ester of dipentaerythritol.

3. A vinyl chloride resin composition for powder molding which comprises a particle vinyl chloride resin, a fine particle vinyl chloride resin, a plasticizer, a stabilizer and a pigment wherein the particle vinyl chloride resin is obtained by the polymerization in the presence of (A) a fatty acid ester of sorbitan, (B) a fatty acid ester of polyoxyethylenesorbitan and (C) a fatty acid ester of pentaerythritol and/or a fatty acid ester of dipentaerythritol.

4. A vinyl chloride resin composition for powder molding according to claim 1, 2 or 3 wherein the particle vinyl chloride resin is obtained by the polymerization in the presence of additionally (D) a fatty acid ester of glycerin.

5. A vinyl chloride resin composition for powder molding according to claim 1, 3 or 4 wherein the weight ratio of (A) and (B) is 10:1-1:10.

6. A vinyl chloride resin composition for powder molding according to claim 1, 2, 3, 4 or 5 wherein amount of each of the esters is 0.01-10 parts by weight based on 100 parts by weight of the monomer and the total amount of the esters is 0.02-20 parts by weight based on 100 parts by weight of the monomer.

7. A vinyl chloride resin composition for powder molding according to claim 1, 2, 3, 4, 5 or 6 wherein content of the fine particle vinyl chloride resin is 3/97-20/80 in the weight ratio to the particle vinyl chloride resin, that of the plasticizer is 40-120 parts by weight, that of the stabilizer is 3-15 parts by weight and that of the pigment is 0.5-10 parts by weight based on 100 parts by weight of the vinyl chloride resin.
